# FASCICULE DE BREVET EUROPEEN

(11) **EP 2 611 961 B1**
(45) Date de publication et mention de la délivrance du brevet: **27.07.2016**
(21) Numéro de dépôt: 11761676.3
(22) Date de dépôt: 29.08.2011
(51) Int. Cl.: D06N 7/00, D06N 3/06, E04F 15/02, C03C 12/02, C03C 17/09, C09K 3/14

(54) **REVETEMENT DE SOLS SOUPLE AVEC DES PROPRIETES ANTIDERAPANTES ET SON PROCEDE DE FABRICATION**
FLEXIBLER RUTSCHFESTER BODENBELAG UND HERSTELLUNGSVERFAHREN DAFÜR
FLEXIBLE FLOOR COVERING WITH NON-SLIP PROPERTIES, AND PRODUCTION METHOD THEREOF

(30) Priorité: 31.08.2010 FR 1056879
(43) Date de publication de la demande: 10.07.2013
(73) Titulaire: GERFLOR, 69100 Villeurbanne (FR)
(72) Inventeur: FERLAY, Charles, F-69770 Montrottier (FR); JULIEN, Hervé, F-42110 Civens (FR); CHARLES, Gwénaëlle, F-69170 Tarare (FR)
(74) Mandataire: Cabinet Laurent & Charras
(86) Numéro de dépôt international: PCT/FR2011/051974
(87) Numéro de publication internationale: WO 2012/028811

(56) Documents cités:
- EP-A2- 0 521 286
- WO-A1-01/19624
- WO-A1-03/106783
- WO-A1-2008/003662

## Description

L'invention se rattache au secteur technique des revêtements de sols.

Les revêtements de sols doivent répondre en fonction de leur utilisation à trois fonctionnalités principales à savoir l'antidérapance, l'entretenabilité et la possibilité de choisir des décors qui peuvent varier d'un aspect clair à un aspect sombre.

Le revêtement de sols souple résilient antidérapant doit remplir un certain nombre de fonctionnalités relatif aux normes auxquelles il se réfère tout particulièrement, il doit répondre à la norme EN 13845 et aux exigences anglaises HSE (Health and Safety Executive) en termes de propriété antiglisse et de résistance à l'usure. Le revêtement doit notamment obtenir le classement Esf (≥ 20°) et Esb (≥ 15°) selon l'annexe C de la norme 13845.

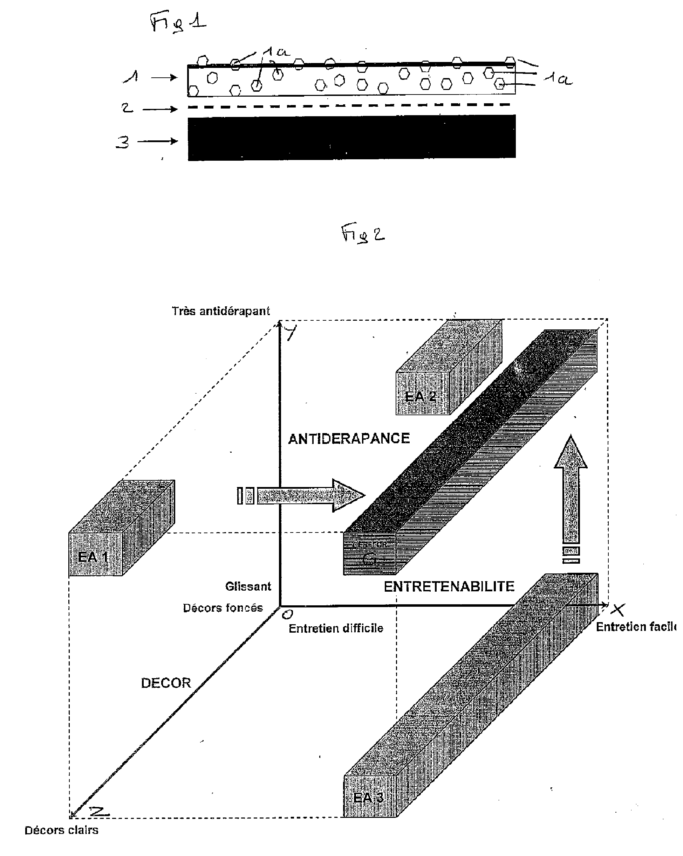

On a représenté figure 1 à titre schématique la constitution d'une structure de revêtement de sols avec une surface (1) chargée de particules antidérapantes (la) et de granules en polychlorure de vinyle afin de constituer la face décor, puis le complexe d'enduction (2) puis la couche envers (3) en polychlorure de vinyle chargé.

Ce produit possède un traitement de surface afin de garantir la facilité d'entretien. Il possède des particules antidérapantes dans toute sa couche d'usure, y compris dans le traitement de surface garantissant le caractère antidérapant pendant toute la vie du revêtement de sols.

Le revêtement de sols proposé est fabriqué par enduction :
- Enduction d'un plastique PVC dit d'envers sur un complexe grille de verre et une couche non tissée en cellulose polyester.
- Enduction du plastisol PVC de surface,
- Saupoudrage des granulés PVC de décors,
- Saupoudrage des particules antidérapantes participant au décor,
- Un saupoudrage du traitement de surface,
- Un saupoudrage à nouveau des particules antidérapantes.

Ainsi, en fonction de la normalisation, le produit possède une quantité de particules antidérapantes d'au moins 75g/m2 dans la couche d'usure associé au traitement de surface. Les particules sont saupoudrées de façon homogène selon une technologie connue.

Ainsi les revêtements de sols souples antidérapants sont connus en soi et ont une construction semblable. Ils possèdent dans leur couche d'usure des particules antidérapantes plus dures que la matière en polychlorure de vinyle plastifié.

Ces particules sont d'origine généralement minérale et suivant leurs caractéristiques, elles présentent dans certains cas des avantages mais aussi des inconvénients.

Les particules les plus utilisées sont en carbure de silicium Csi. Elles ont une grande dureté (9 mohs), avec une grande résistance à l'abrasion. La particule qui est anguleuse apporte le caractère antidérapant du revêtement de sol. Ces particules ont, de plus, un effet scintillant. L'utilisation de ces particules extrêmement dures présente de nombreux inconvénients. Les revêtements de sols les contenants sont en particulier très difficiles à recycler, il faut séparer les particules dures de la matrice polymère afin de ne pas endommager les équipements de transformation traditionnels. En outre, l'analyse du cycle de vie du carbure de silicium est très défavorable car sa synthèse est très énergivore en émettant beaucoup de GES. En dernier lieu, l'aspect noir de cette particule en Csi limite le décor du revêtement de sol.

Il est connu ainsi d'utiliser une particule métallique constituée de Trioxyde d'Aluminium couramment dénommé 'CORINDON'. Son utilisation présente l'avantage de la dureté équivalent au Csi, apporte la fonctionnalité antidérapante du revêtement de sol. Son aspect est dans une gamme de couleur de blanc à brun. L'inconvénient réside également dans la difficulté du recyclage, une analyse du cycle de vie défavorable et l'absence d'aspect scintillant.

On connaît aussi l'utilisation du sable naturel avec à son tour des avantages et des inconvénients. Les avantages sont essentiellement relatifs à l'analyse du cycle de vie, avec une absence de transformation industrielle lourde. La dureté reste importante (7 mohs). Les particules de sable sont anguleuses et donc intéressantes pour le caractère antidérapant. En dernier lieu, la particule de sable peut-être colorée ce qui est important pour les aspects décors.

Par contre, les revêtements contenant ces particules sont difficilement recyclables car la dureté est trop élevée. En outre, le sable contient de la silice cristalline provoquant la silicose et nécessitant des aménagements industriels lourds.

Il est aussi connu d'utiliser des particules polymériques de type PA ou PMMA. Dans ce cas, ce type de particules permet l'obtention d'un caractère antidérapant. Le recyclage des revêtements de sols les incluant est possible en fonction des températures de fusion de ces particules. Elles permettent d'avoir une gamme de formes et de décors large. Leur inconvénient majeur réside dans leur dureté très faible vis-à-vis des particules minérales leur donnant une faible résistance à l'usure. Egalement, une autre restriction réside dans leur compatibilité chimique pas forcément compatible avec la matrice de fabrication.

On connaît par ailleurs par le document WO 01/19624 un matériau à base rigide (béton, agrégats de marbre et de sable) dans lequel sont saupoudrées des particules métallisées qui sont ensuite poncées pour donner un aspect décoratif.

Selon le brevet EP 0 521 286, le produit est un carrelage qui subit une opération de ponçage ou de meulage de sa surface.

**On connaît par les documents** WO 2008/003662 **et** WO 03/106783 **de revêtements de sols incluant des particules anti-dérapantes dans la couche de surface**

On connaît ainsi l'utilisation de particules réalisées à partir de verre broyé. Les avantages sont dans leur dureté élevée (6 mohs) suffisante pour les revêtements de sols. Ces particules sont issues d'un recyclage de sorte que produit fini peut-être recyclé. La particule est transparente. Par contre, les inconvénients d'utilisation de particules à partir de verre broyé sont importants avec une résistance à l'usure faible, un aspect décor limité avec le verre brut et un aspect scintillant impossible à obtenir.

Ainsi l'analyse de tous ces types de particules qui peuvent et son utilisées dans les revêtements de sols font apparaître qu'il est très difficile de réaliser un revêtement de sol avec les différentes fonctionnalités évoquées précédemment et qui soit recyclable.

La démarche du Demandeur a donc été de tenir compte des limitations techniques, économiques résultant de l'utilisation connue des particules précitées en voulant répondre aux différents critères d'antidérapance, d'entretenabilité, de variation de décor avec l'aspect scintillant et aussi la possibilité de recycler le revêtement de sol dans les meilleures conditions techniques et économiques.

Cette démarche a abouti à la mise en oeuvre de revêtements de sols répondant à l'ensemble de ces paramètres par la conception de particules antidérapantes qui permettent l'obtention de ces paramètres.

La solution imaginée par le Demandeur réside dans une sélection et une conception particulières de particules antidérapantes qui sont projetées et saupoudrées de manière identique à la pratique antérieure.

La conception et la sélection de ces particules spécifiques selon l'invention résultent d'un processus optimisé à la mise en oeuvre d'un procédé spécifique de fabrication des dites particules.

Ainsi, selon une première caractéristique de l'invention, le revêtement de sol du type comprenant des particules antidérapantes dans sa couche de surface est remarquable en ce que le revêtement est en un matériau souple et résilient, et en ce que les dites particules sont constituées d'un noyau de verre broyé revêtu en tout ou partie de sa surface par un revêtement métallique, les dites particules étant saupoudrées dans une base PVC souple sans travail de finition.

Selon une autre caractéristique, le revêtement métallique disposé sur tout ou partie du noyau en verre broyé de particules est du type cuivre, inox, aluminium, laiton, argent, or.

Selon une autre caractéristique, le procédé consistant à déposer le revêtement métallique sur tout ou partie du noyau de verre de chaque particule s'effectue sous vide, en PVD (dépôt physique en phase vapeur)

Ces caractéristiques et d'autres encore ressortiront bien de la suite de la description.

Pour fixer l'objet de l'invention illustré de manière non limitative aux figures des dessins où :
la figure 1 est une vue à caractère schématique illustrant la structure d'un revêtement de sol classique avec effet antidérapant,
la figure 2 est un diagramme à trois axes situant les produits de l'Art Antérieur et celui obtenu par la mise en oeuvre de l'invention selon les trois critères, antidérapant, décor et entretien,
la figure 3 est une vue de dessus d'un échantillon de revêtement de sol incluant du carbure de silicium et illustrant son aspect,
la figure 4 est une vue de dessus d'un échantillon de revêtement incluant des particules selon l'invention,
la figure 5 est une vue à caractère schématique d'une particule selon l'invention.

Afin de rendre plus concret l'objet de l'invention, on le décrit maintenant d'une manière non limitative illustrée aux figures des dessins.

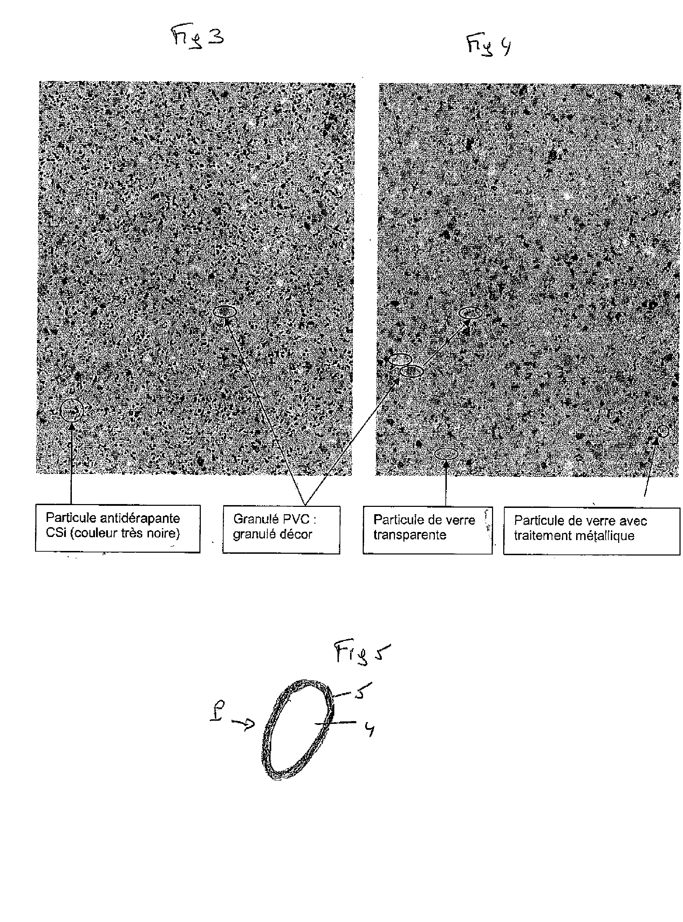

Le revêtement de sol en un matériau souple et résilient comprend dans sa couche de surface en base PVC souple selon l'invention des particules antidérapantes (P) illustrées figure 5 qui comprennent un noyau de verre broyé (4) qui est revêtu en tout ou partie de sa surface extérieure par un revêtement métallique (5). Les dites particules sont saupoudrées dans la base PVC souple sans travail de finition.

Ce revêtement peut être du cuivre, de l'inox, de l'aluminium, du laiton, de l'argent, de l'or ou autres. Le choix ou la nature du matériau métallique dépend aussi de l'application du revêtement de sol considéré et des effets techniques et visuels souhaités. Ce revêtement métallique peut être effectué sur tout ou partie de la surface de chaque particule antidérapante, également en fonction des critères et des besoins recherchés.

Selon l'invention, il est possible que le revêtement de sol inclut de manière homogène ses particules, mais aussi il est possible de les concentrer dans des zones spécifiques selon les besoins. Il est aussi possible de les combiner avec d'autres particules de verre broyé non revêtues de matériau métallique et dans des proportions pouvant aller par exemple à 50/50. La taille de ces particules est du même type que ce qui est pratiqué selon l'Art Antérieur.

La mise en oeuvre de fabrication de ces particules selon l'invention peut se faire de toute manière appropriée. Cependant, la solution de l'invention consiste à procéder au dépôt de revêtement métallique sur les noyaux de verre broyé selon la technique sous vide, connue sous la dénomination PVD.

La solution imaginée par le Demandeur est particulièrement intéressante et innovante par rapport à l'Art Antérieur.

La solution proposée par le Demandeur n'entraîne aucun travail de finition, sans ponçage ni post-traitement.

La nouvelle particule antidérapante selon l'invention possède un traitement de surface lui permettant de répondre aux exigences suivantes :
- Bonne compatibilité avec le polychlorure de vinyle PVC et le verre,
- Caractère antidérapant conservé,
- Aspect métallique unique apportant un aspect scintillant et clair,
- Encrassement limité du produit car le traitement de surface de la particule limite son encrassement,
- Le revêtement de sol est recyclable car la dureté de la particule est plus faible que les particules utilisées selon l'Art Antérieur tel que rappelé, Csi, Corindon, sable, etc...

Les figures 3 et 4 montrent les aspects différents obtenus selon un revêtement de sol avec des particules en carbure de silicium et celles selon l'invention avec un noyau de verre broyé recevant un traitement de surface par un dépôt métallique en tout ou partie de son volume.

On a représenté figure 2 un diagramme dans lequel l'axe OX vise les conditions d'entretien difficiles à l'entretien facile. L'axe OY vise les conditions d'entretien de glissant à très antidérapant. L'axe OZ vise les conditions de décor, de décors foncés à décors clairs.

On a ainsi situé trois produits de l'Art Antérieur EA1, EA2, EA3 et celui de l'invention G.

Selon EA1, les particules antidérapantes sont noires en Csi. Les décors sont alors très limités car assombris par le carbure de silicium. L'entretien pose moins de problème car le carbure donne un aspect pré encrassé.

Selon le produit EA2, les particules antidérapantes sont blanches ou transparentes (corindon, quartz, sable, verre nu) ce qui permet de proposer des décors clairs et riches. Cependant, les revêtements s'encrassent rapidement et sont difficiles à nettoyer.

Le produit EA3 n'inclut pas de particules antidérapantes. Le choix des coloris est varié, l'entretien facile par l'absence de rugosité. Par contre, on constate un problème de glissance à l'humidité. Ces produits ne répondent pas aux exigences HSE et EN 13845 rappelées précédemment.

Le revêtement de sol G, selon l'invention, se situe dans le diagramme dans une optimisation combinée des trois critères.

Les tests de glissance effectués à l'aide du test du pendule permettent de mesurer la capacité du revêtement de sol à freiner le pendule lorsque le patin frotte et montre que le revêtement de sol selon l'invention possède d'excellentes propriétés anti glisse sans pénaliser sa rugosité ce qui le rend plus facile à nettoyer et moins facile à encrasser.

Les avantages ressortent bien de l'invention. On souligne la conception nouvelle et inattendue des particules antidérapantes dans cette application spécifique de revêtement de sol souple et les avantages qui en résultent avec en particulier une capacité de recyclage. L'utilisation de ce type de particules traitées sous vide pour obtenir les performances antidérapantes et décor est particulièrement innovante, aucun produit de ce type n'existant et les documents de l'art antérieur rappelés ne suggérant pas une telle solution.

Le procédé de mise en oeuvre du dépôt et traitement de surface par dépôt sous vide du revêtement métallique est aussi inattendu. Cette technique, connue en soi, est réservée à des produits de hautes technologies eux-mêmes et l'application de ce procédé sous vide restait peu évidente à réaliser et à maîtriser pour ce type d'application.

## Revendications

1. Revêtement de sol du type comprenant des particules antidérapantes dans sa couche de surface est **caractérisé en ce que** le revêtement est en un matériau souple et résilient, et **en ce que** les dites particules sont constituées d'un noyau de verre broyé revêtu en tout ou partie de sa surface par un revêtement métallique, les dites particules étant saupoudrées dans une base PVC souple sans travail de finition.

2. Revêtement de sol selon la revendication 1, **caractérisé en ce que** le revêtement métallique disposé sur tout ou partie du noyau en verre broyé de particules est du type cuivre, inox, aluminium, laiton, argent, or.

3. Revêtement de sol selon l'une quelconque des revendications 1 et 2 **caractérisé en ce qu'**il comprend dans sa couche de surface des particules métalliques constituées de noyau de verre broyé et revêtues en tout ou partie d'un matériau métallique et de particules constituées de noyaux de verre broyés sans revêtement métallique.

## Patentansprüche

1. Bodenbelag mit rutschhemmenden Partikeln in seiner Oberflächenschicht, **dadurch gekennzeichnet, dass** der Belag aus einem flexiblen und elastischen Material besteht, und dass die Partikel aus einem Glasmehlkern gebildet werden, welche an ihrer Oberfläche ganz oder teilweise mit einem Metallüberzug beschichtet sind, wobei die Partikel ohne Oberflächenfinish in eine Basis aus Weich-PVC eingestreut werden.

2. Bodenbelag nach Anspruch 1, **dadurch gekennzeichnet, dass** der Metallüberzug, der den Partikel-Glasmehlkern ganz oder teilweise überzieht, vom Typ her aus Kupfer, Edelstahl, Aluminium, Messing, Silber, Gold besteht.

3. Bodenbelag nach einem der Ansprüche 1 und 2, **dadurch gekennzeichnet, dass** der Bodenbelag in seiner Oberflächenschicht Metallpartikel mit Glasmehlkernen enthält, die ganz oder teilweise mit einem metallischen Material überzogen sind und Metallpartikel mit Glasmehlkernen ohne Metallüberzug enthält.

## Claims

1. Floor covering of the type comprising non-slip particles in its surface layer **characterised in that** the covering is made from a flexible and resilient material, and **in that** said particles are formed by a crushed glass core, the surface of which is fully or partially covered with a metal covering, the said particles being sprinkled in a flexible PVC base with no finishing work.

2. Floor covering according to claim 1, **characterised in that** the metal covering on all or part of the core of crushed glass particles is copper, stainless steel, aluminium, brass, silver, gold.

3. Floor covering according to either of claims 1 and 2, **characterised in that** it comprises in its surface layer metal particles formed by a crushed glass core which are fully or partially covered with a metal material and particles formed by crushed glass cores without a metal covering.
